# EUROPEAN PATENT SPECIFICATION

(11) **EP 2 246 600 B1**
(45) Date of publication and mention of the grant of the patent: **06.06.2012**
(21) Application number: 09398006.8
(22) Date of filing: 22.09.2009
(51) Int. Cl.: F16K 11/078, F16K 27/04

(54) **Monoblock mixer tap**
Monoblock -Mischbatterie
Robinet mélangeur monobloc

(30) Priority: 27.04.2009 PT 10454209
(43) Date of publication of application: 03.11.2010
(73) Proprietor: Lomarplás- Comércio de Torneiras e Artigos Sanitários, LDA., 4705-100 Braga (PT)
(72) Inventor: Pereira da Cruz, João, 1249-103 Lisboa (PT)
(74) Representative: Pereira da Cruz, Jorge Afonso

(56) References cited:
- EP-A1- 1 621 686
- EP-A1- 1 881 245
- DE-A1-102007 014 251
- DE-U1-202006 007 727

## Description

### Scope of the invention

This invention relates to a monobloc mixer tap. This tap comprises a monobloc body which is attached to the fluid or water pipe whereby the supply takes place. More particularly, it is comprised of an outer tubular metal body, wherein a synthetic polymer inner element is pressure-fitted and in which is mounted a barrel made of a polymeric material also, said barrel being operated by a lever which is accessible from the outside and enables to open or close it and, whenever required, mix hot water with cold water.

### Prior art

The already known monobloc mixer taps are generally comprised of several parts, some of them being casted and subsequently machined, this factor accounting for higher costs as far as labour and materials are concerned. The usually employed material is brass, and so it will raise the price of the final product.

The most relevant prior art is the document DE 202006007727 U1, which refers to a vertical tap comprising a tap body connected to a stop valve body. The tap body is made from a copper pipe and has a flange on the front side. The stop valve body is inserted into the tap body from below. A water outlet channel is joined to the opening.

### Brief description of the drawings

The following description is based on the enclosed drawings which, with a non-limiting character, illustrate the tap object of this invention. The figures represent:

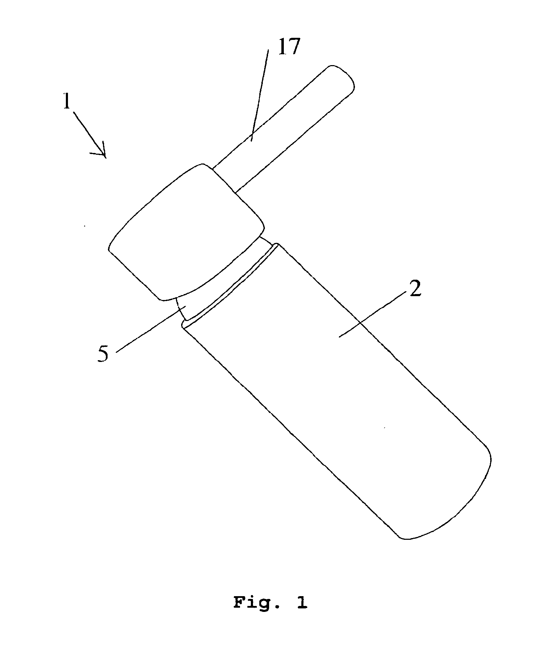

Figure 1, a front view of the monobloc mixer tap after being duly mounted;

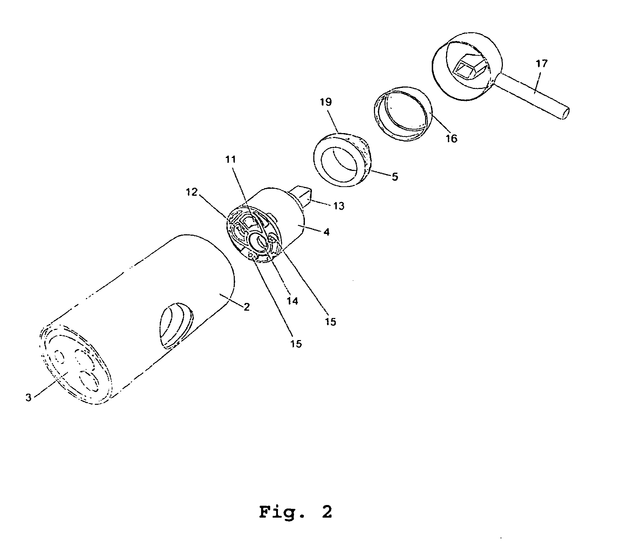

Figure 2, an exploded view of the tap object of the invention;

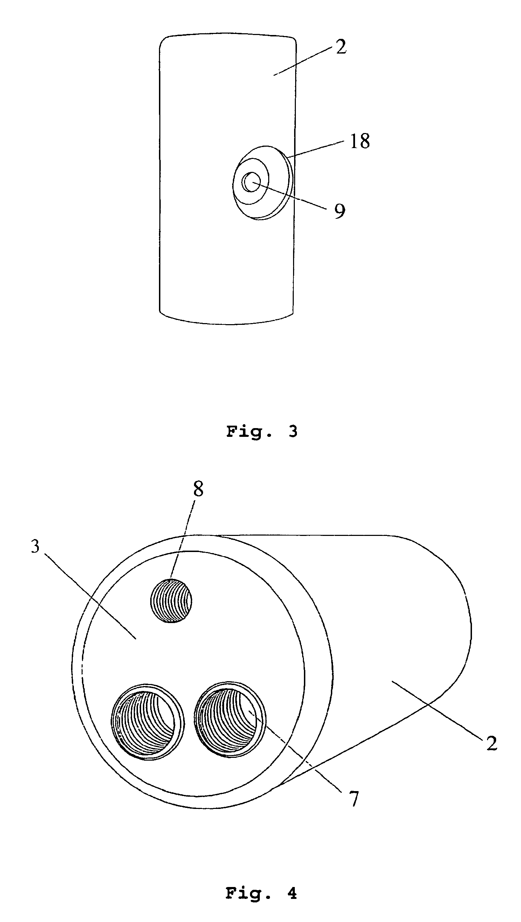

Figure 3, a front view of the tap without the operating lever;
Figure 4, a bottom view of the tap illustrated in figure 3;

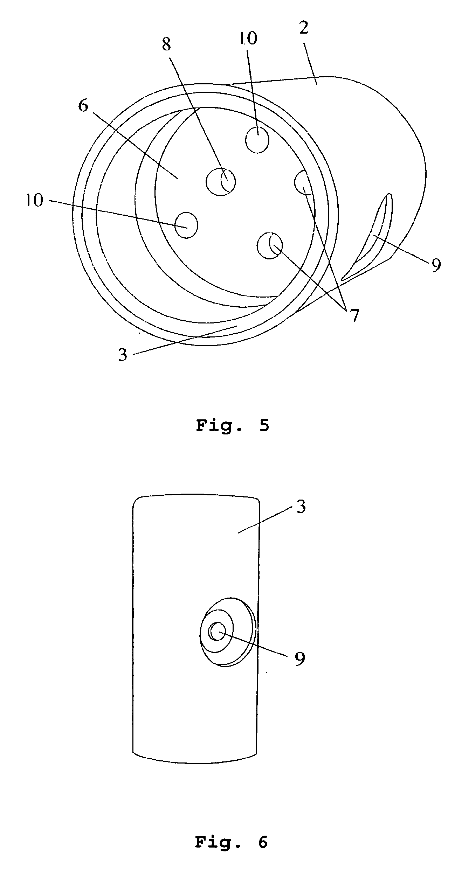

Figure 5, a top view of the tap illustrated in figure 3;
Figure 6, a front view of the inner element;

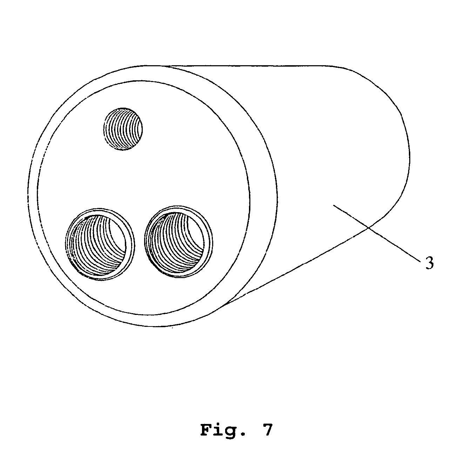

Figure 7, a bottom view of the inner element;

### Detailed description of the invention

As can be observed, the tap generically represented by reference 1 comprises an outer tubular metallic body 2, an inner element 3 for connection to the supply of hot and cold water, a barrel (4) for opening and mixing the hot water and cold water, a fixing element (5) for fixing the barrel (4) to the inner element (3) and an operating lever, wherein said barrel (4) and said fixing element (5) are mounted in said inner element (3). The tap is characterized in that said inner element (3) is pressure-fitted in said outer tubular metallic body (2) and is made of a synthetic polymer and in that said barrel (4) is also made of a polymeric material.

The inner element 3, in its upper end, is provided with a chamber 6 for inserting the barrel 4. Inside the inner element 3 there are also circular vertical channels 7 for hot and cold water supply, which extend until they reach its lower end, along with a vertical channel 8 designed for feeding the tap's spout which extends until it reaches a horizontal channel 9 for feeding the spout as well, and two holes 10 for fixing the barrel 4.

The aforementioned barrel 4 comprises the feeding chambers 11 and 12, these being aligned with the hot and cold water supply channels 7 from the inner element 3, and a control element 13 positioned on its top which, by rotating and pivoting, will open/close the communication between the feeding chambers 11 and 12 and the mixing chamber 14, which in its turn is connected to the inlet port 8 of the spout.

The barrel 4 also includes locking bolts 15 to fit the holes 10 of the inner element 3. The final fixing of the barrel 4 to the element 3 is carried out by a fixing element 5 which is provided with a thread 19 working on the thread of the inner wall of the cavity 6 of the inner element 3. This ring 5, when assembled, is hidden by a metal ring 16 with an inner thread in order to promote its fixing.

The lever 17 fits the control element 13 of the barrel 4 by convenient means. The fitting occurs, for instance, with the said control element having a parallelepiped configuration with a square-shaped section, so that it ensures the mechanical connection to a coincident recess of the operating lever 17. The operating lever 17 can, by rotating and pivoting, by the action of the user, open the hot and cold water and mix both in suitable proportions.

Both the metallic body 2 and the inner element 3 include concentric holes, 9 and 18 respectively, for connection to the spout (not shown).

The inner element 2 is pressure-fitted into said outer metal body not presenting any clearance and thus ensuring the sealing of the tap 1. This polymeric material element 2 is obtained by means of injection.

The outer tubular metal body is obtained by simply cutting it with an appropriate length. Subsequently, the said body and the cover element of the lever are metal-coated.

As can be concluded from the above, this mixer tap can be manufactured at very low costs. Actually, the materials as well as the manufacturing processes of the different components and their assembly are very easy, inexpensive and quick.

On the other hand, this tap abides by all the regulated standards and it can be used even with highpressure systems.

## Claims

1. A monobloc mixer tap (1) comprising an outer tubular metallic body (2), an inner element (3) for connection to the supply of hot and cold water, a barrel (4) for opening and mixing the hot water and cold water, a fixing element (5) for fixing the barrel (4) to the inner element (3) and an operating lever, wherein said barrel (4) and said fixing element (5) are mounted in said inner element (3),
**characterized in that**
said inner element (3) is pressure-fitted in said outer tubular metallic body (2) and is made of a synthetic polymer and **in that** said barrel (4) is also made of a polymeric material.

2. A monobloc mixer tap (1) according to the previous claim, **characterized in that** the inner element (3) , in its upper end, is provided with a chamber (6) for inserting the barrel (4) and that inside the inner element (3) there are also circular vertical channels (7) for hot and cold water supply, which extend until they reach its lower end, along with a vertical channel (8) designed for feeding the tap's spout which extends until it reaches a horizontal channel (9) for feeding the spout as well, and two holes (10) for fixing the barrel (4).

3. A monobloc mixer tap (1) according to the previous claims, **characterized in that** the pressure-fitted inner element (3), not presenting any clearance, ensures the sealing of the tap's body (2).

4. A monobloc mixer tap (1) according to the previous claims, **characterized in that** the metallic body and the inner element include concentric holes (9) and (18) intended for connection to the spout.

5. A monobloc mixer tap (1) according to the previous claims, **characterized in that** the said barrel (4) comprises the feeding chambers (11) and (12), these being aligned with the hot and cold water supply channels (7) from the inner element (3), and a control element (13) positioned on its top which, by rotating and pivoting, will open/close the communication between the feeding chambers (11) and (12) and the mixing chamber (14), which in its turn is connected to the inlet port (8) of the spout.

6. A monobloc mixer tap (1) according to the previous claims, **characterized in that** the control element (13) is connected to the operating lever (17) of the tap.

7. A monobloc mixer tap (1) according to the previous claims, **characterized in that** the control element (13) has a parallelepiped configuration with a square-shaped section, so that it ensures the mechanical connection to the operating lever (17).

8. A monobloc mixer tap (1) according to the previous claims, **characterized in that** the fixing element (5) of the barrel (4) is provided with an outer thread (19) for connecting to the inner element (3) and simultaneously allowing the connection by pitching of a cover element (16).

9. A monobloc mixer tap (1) according to the previous claims, **characterized in that** the outer body (2), the cover element (16) and the lever (17) are metal-coated.

## Patentansprüche

1. Eine Einhand Waschtischbatterie (1) bestehend aus einem äußeren rohrförmigen metallischem Körper (2), einem inneren Element (3) zum Anschluss an die Heiß- und Kaltwasserleitung, einen Zylinder (4) um den Zulauf und das Mischen von heißem und kaltem Wasser zu ermöglichen, ein Befestigungselement (5) um den Zylinder (4) am inneren Element (3) und am Hebel zu befestigen, worin besagter Zylinder (4) und besagtes Befestigungselement (5) im besagten inneren Element (3) angebracht sind, **gekennzeichnet dadurch, dass** das besagte innere Element (3) in das äußere rohrförmige Element (2) eingepresst ist und aus einem synthetischen Polymer gemacht ist und darin, dass besagter Zylinder (4) auch aus einem polymerischen Material gemacht ist.

2. Eine Einhand Waschtischbatterie (1) gemäß dem vorigen Anspruch, **gekennzeichnet dadurch, dass** das innere Element (3) am oberen Ende eine Kammer (6) besitzt, um den Zylinder (4) einzusetzen und dass sich in dem inneren Element (3) kreisförmige vertikale Kanäle (8) für die Heiß- und Kaltwasserzufuhr befinden, die bis zum unteren Ende reichen, außerdem einem vertikalen Kanal (8), der dafür gemacht ist, den Ausguss des Wasserhahns zu bedienen und bis zu einem horizontalen Kanal (9) reicht, der ebenfalls den Ausguss bedient, und zwei Löcher (10) um den Zylinder (4) zu befestigen.

3. Eine Einhand Waschtischbatterie (1) gemäß den vorigen Ansprüchen, **gekennzeichnet dadurch, dass** das eingepresste innere Element (3) kein Spiel hat und somit die Abdichtung des Körpers gewährleistet.

4. Eine Einhand Waschtischbatterie (1) gemäß den vorigen Ansprüchen, **gekennzeichnet dadurch, dass** der metallische Körper und das innere Element konzentrische Löcher (9) und (18) zur Verbindung zum Ausguss besitzen.

5. Eine Einhand Waschtischbatterie (1) gemäß den vorigen Ansprüchen, **gekennzeichnet dadurch, dass** der besagte Zylinder (4) die Zulaufkammern (11) und (12) beinhaltet, die mit den Heiß- und Kaltwasserkanälen (7) vom inneren Element (3) verbunden sind, und einem auf seinem oberen Ende angebrachten Kontrollelement (13), welches durch rotieren und schwenken die Kommunikation zwischen den Zulaufkammern (11) und (12) und der Mischkammer (14), die ihrerseits mit dem Wasserzulauf (8) verbunden ist, öffnet und schließt.

6. Eine Einhand Waschtischbatterie (1) gemäß den vorigen Ansprüchen, **gekennzeichnet dadurch, dass** das Kontrollelement (13) mit dem Bedienungshebel (17) des Wasserhahns verbunden ist.

7. Eine Einhand Waschtischbatterie (1) gemäß den vorigen Ansprüchen, **gekennzeichnet dadurch, dass** das Kontrollelement (13) eine Spatkonfiguration mit einem quadratisch geformten Ausschnitt besitzt, um die mechanische Verbindung zum Bedienungshebel (17) zu gewährleisten.

8. Eine Einhand Waschtischbatterie (1) gemäß den vorigen Ansprüchen, **gekennzeichnet dadurch, dass** das Befestigungselement (5) des Zylinders (4) mit einem Außengewinde (19) versehen ist um es mit dem inneren Element (3) zu verbinden und gleichzeitig eine Verbindung durch das Stampfen eines Abdeckungselements (16) zu erlauben.

9. Eine Einhand Waschtischbatterie (1) gemäß den vorigen Ansprüchen, **gekennzeichnet dadurch, dass** der Außenkörper (2), das Abdeckungselement (16) und der Hebel (17) metallüberzogen sind.

## Revendications

1. Un robinet mélangeur monobloc (1) comprenant un corps métallique tubulaire extérieur (2), un élément interne (3) pour le raccordement à l'alimentation en eau chaude et froide, un cylindre (4) d'ouverture et de mélange de l'eau chaude et eau froide, un élément de fixation (5) pour la fixation du cylindre (4) à l'élément intérieur (3), et un levier de commande, dans lequel le dit cylindre (4) et le dit élément de fixation (5) sont montés dans le dit élément intérieur (3),
**caractérisé en ce que**
le dit élément intérieur (3) est mis sous pression dans le dit corps métallique tubulaire extérieur (2) et est fait d'un polymère synthétique et **en ce que** le dit cylindre (4) est également fait d'un matériau polymère.

2. Un robinet mélangeur monobloc (1) selon l'assertion précédente, **caractérisé en ce que** l'élément intérieur (3), dans sa partie supérieure, est pourvu d'une chambre (6) pour l'insertion du cylindre (4) et qui à l'intérieur de l'élément interne (3) il y a aussi des circulaires canaux verticaux (7) pour l'alimentation en eau chaude et froide, qui s'étendent jusqu'à ce qu'ils atteignent son extrémité inférieure, avec un canal vertical (8) conçu pour l'alimentation du tuyau du robinet qui s'étend jusqu'à ce qu'il atteigne un canal horizontal (9) pour l'alimentation du tuyau aussi, et deux trous (10) pour la fixation du cylindre (4).

3. Un robinet mélangeur monobloc (1) selon les assertions précédentes, **caractérisé en ce que** l'élément intérieur mis sous pression (3), ne présentant pas de relâche, assure l'étanchéité du corps du robinet (2).

4. Un robinet mélangeur monobloc (1), selon les assertions précédentes, **caractérisé en ce que** le corps métallique et l'élément intérieur comprennent des trous concentriques (9) et (18) destinés à la connexion au tuyau.

5. Un robinet mélangeur monobloc (1), selon les assertions précédentes, **caractérisé en ce que** le dit cylindre (4) comprend les chambres d'alimentation (11) et (12), ceux-ci étant alignées avec les canaux d'approvisionnement en eau chaude et froide (7), à partir de l'élément intérieur (3), et un élément de commande (13), placé sur son sommet, qui, en tournant et pivotant, va ouvrir/fermer la communication entre les chambres d'alimentation (11) et (12) et la chambre de mélange (14), qui à son tour est reliée à l'orifice d'entrée (8) du tuyau.

6. Un robinet mélangeur monobloc (1), selon les assertions précédentes, **caractérisé en ce que** l'élément de commande (13) est relié au levier de commande (17) du robinet.

7. Un robinet mélangeur monobloc (1), selon les assertions précédentes, **caractérisé en ce que** l'élément de commande (13) a une configuration parallélépipède avec une section carrée, de sorte qu'il assure la liaison mécanique au levier de commande (17).

8. Un robinet mélangeur monobloc (1), selon les assertions précédentes, **caractérisé en ce que** l'élément de fixation (5) du cylindre (4) est muni d'un filetage extérieur (19) pour la connexion à l'élément interne (3) et, simultanément, permettant la connexion en tantage d'un élément de couverture (16).

9. Un robinet mélangeur monobloc (1), selon les assertions précédentes, **caractérisé en ce que** le corps extérieur (2), l'élément de couverture (16) et le levier (17) sont revêtus de métal.
